(19) Europäisches Patentamt
European Patent Office
Office européen des brevets

(11) EP 1 987 099 B2

(12) **NEW EUROPEAN PATENT SPECIFICATION**
After opposition procedure

(45) Date of publication and mention of the opposition decision:
**13.08.2014 Bulletin 2014/33**

(45) Mention of the grant of the patent:
**24.02.2010 Bulletin 2010/08**

(21) Application number: **06847465.9**

(22) Date of filing: **07.11.2006**

(51) Int Cl.:
***C08L 27/18*** *(2006.01)*

(86) International application number:
**PCT/US2006/043308**

(87) International publication number:
**WO 2007/061620 (31.05.2007 Gazette 2007/22)**

(54) **TETRAFLUOROETHYLENE COPOLYMER COMPOSITION FOR INJECTION MOLDING**

TETRAFLUORETHYLEN-COPOLYMER-ZUSAMMENSETZUNG ZUR INJEKTIONSFORMUNG

COMPOSITION COPOLYMÈRE DE TETRAFLUOROÉTHYLÈNE POUR MOULAGE PAR INJECTION

(84) Designated Contracting States:
**DE FR GB IT**

(30) Priority: **08.11.2005 JP 2005323630**

(43) Date of publication of application:
**05.11.2008 Bulletin 2008/45**

(73) Proprietor: **DuPont-Mitsui Fluorochemicals Company, Ltd.**
**Tokyo 101-0064 (JP)**

(72) Inventor: **NAMURA, Shinichi**
**Kashiwa-shi, Chiba 277-0042 (JP)**

(74) Representative: **Matthews, Derek Peter**
**Dehns**
**St Bride's House**
**10 Salisbury Square**
**London**
**EC4Y 8JD (GB)**

(56) References cited:
**EP-A1- 0 138 524**
**WO-A-01/57131**
**WO-A1-03/093333**
**US-A- 5 603 999**
**US-A1- 2002 099 143**
**US-A1- 2002 099 143**

- **ENDO ET AL.: 'Crystallization in Binary Blends of Polytetrafluoroethylene with Perfluorinated Tetrafluoroethylene Copolymer' POLYMER JOURNAL vol. 36, no. 9, 2004, pages 716 - 727**
- **L.A. UTRACKI: 'Polymer Blends Handbook', vol. 1-2, 2004, KLUWER ACADEMIC PUBLISHERS, DORDRECHT/BOSTON/LONDON page 205**



Printed by Jouve, 75001 PARIS (FR)

## Description

## FIELD OF INVENTION

The present invention pertains to a tetrafluoroethylene copolymer composition for injection molding with excellent durability and resistance to chemical permeation.

## BACKGROUND OF THE INVENTION

Melt fabricable tetrafluoroethylene/perfluoro(alkyl vinyl ether) copolymer (referred to as PFA hereinafter) has excellent heat resistance, chemical resistance, and purity. Therefore, it is used as a molding material for pipes for transporting various types of chemical solutions, fittings for pipes, storage containers, pumps, and filters used in the semiconductor or liquid crystal manufacturing process. Among them, fittings, container plugs and caps, pumps, filters, or other parts with complicated shapes are mainly molded by means of injection molding using PFA having a melt flow rate (referred to as MFR hereinafter) of 10 g/10 min or greater.

Sulfuric acid, hydrochloric acid, hydrofluoric acid, nitric acid, ammonia, and their mixtures formed with hydrogen peroxide or ozone, developer or peeling solution for photoresist containing fluorine-based surfactant, high-concentration ozone vapor, ozone water, or other chemical solutions having high permeability are used in the aforementioned application fields. It is desired to have high durability and to improve the resistance to chemical permeation of PFA in order to retard corrosion of the equipment, and to reduce cracking in molding products exposed to chemical solutions.

Flex life has been used as an index for evaluating the durability of PFA, and nitrogen gas permeability has been used as an index for evaluating its permeability. For conventional commercially available PFA for injection molding, flex life is in the range of 10,000 to 400,000 cycles, and nitrogen gas permeability is in the range of $0.8\text{-}1.2x10^{-10}$ $cm^3$(STP).cm/$cm^2$.sec.cm Hg. For conventional commercially available PFA, flex life is related to crystallinity. As crystallinity decreases, the flex life increases. On the other hand, as crystallinity decreases permeability becomes higher, and resistance to chemical permeation deteriorates. U.S. Patent No 6,649,699 and Japanese Kokai Patent Application No. 2003-327770 disclose a composition composed of PFA and polytetrafluoroethylene (referred to as PTFE hereinafter), and having an MFR of 4 or less as a composition with excellent permeation resistance and durability useful for extrusion molding pipes, and other articles, such as are disclosed above. However, no composition for injection molding with excellent permeation resistance is disclosed in these references.

## SUMMARY OF THE INVENTION

The composition according to the present invention is a composition for injection molding comprising polytetrafluoroethylene and copolymer of tetrafluoroethylene and perfluoro(alkyl vinyl ether), said composition having a melt flow rate of 12 g/10 min or greater, a flex life of 20,000 cycles or greater, and a nitrogen gas permeability of $0.8\times10^{-10}$ $cm^3$ (STP).cm/$cm^2$.sec.cm Hg or less.

## BRIEF EXPLANATION OF FIGURES

Figure 1 is a schematic diagram illustrating the apparatus used in the hydrochloric acid permeation test.

## DETAILED DESCRIPTION OF THE INVENTION

The composition for injection molding of the present invention is comprised of PFA and PTFE and has MFR of 12 g/10 min or greater, preferably, 14 g/10 min or greater, a flex life of 20,000 or larger, preferably, 40,000 or larger, more preferably, 100,000 or larger, and a nitrogen gas permeability of $0.8x10^{-10}$ $cm^3$(STP).cm/$cm^2$.sec.cm Hg or less, preferably, $0.7x10^{-10}$ $cm^3$(STP).cm/$cm^2$.sec.cm Hg or less.

The PFA constituting the composition of the present invention can be manufactured by means of solution polymerization, emulsion polymerization, suspension polymerization, or other conventional method. It has a flex life of 40,000 cycles or greater, preferably, 100,000 cycles or greater, more preferably, 200,000 cycles or greater. Examples of perfluoro(alkyl vinyl ether) (PAVE) that can be used as comonomer are shown in Formula 1 or 2. It is preferred to use perfluoro(propyl vinyl ether) (referred to as PPVE hereinafter) or perfluoro(ethyl vinyl ether) (referred to as PEVE hereinafter) as perfluoro(alkyl vinyl ether).

**Formula 1**

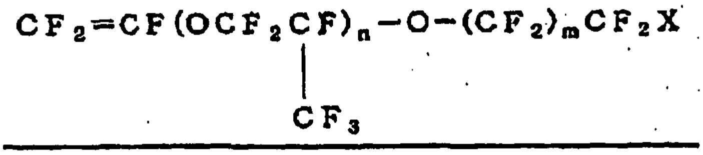

X is H or F
n is an integer in the range of 0 - 4
m is an integer in the range of 0 - 7

**Formula 2**

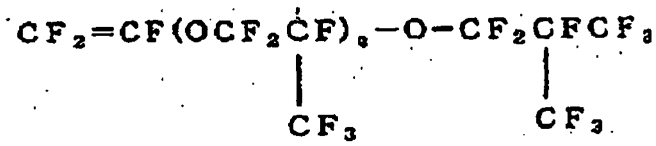

q is an integer in the range of 0 - 3

In the present invention, perfluoro(alkyl vinyl ether) (PAVE) content of PFA is 3 wt% or greater. If the content is less than 3 wt%, the durability is not good enough. The preferred lower limit on the PAVE content is 5 wt%. In general, the greater the PAVE content, the better the durability of the composition obtained by mixing with PTFE. However, if the PAVE content exceeds 20 wt%, the rigidity of the injection molding product tends to be too low. The preferred upper limit on the PAVE content is 15 wt%, more preferably, 10 wt%.

The PFA used in the present invention is desired to have an MFR of 2 g/10 min or greater. The lower the MFR, the better the durability of the composition. However, it is difficult to obtain a composition suitable for injection molding if the MFR is lower than 2 g/10 min. The lower limit on MFR is preferred to be 4 g/10 min. The upper limit on MFR that can maintain the good durability is 70 g/10 min, preferably, 40 g/10 min. MFR can be adjusted to a level between the aforementioned upper limit and lower limit by mixing PFA with MFR lower than 2 g/10 min and PFA with MFR of 2 g/10 min or greater.

PTFE is mixed with the aforementioned PFA in the present invention. PTFE is a homopolymer of tetrafluoroethylene or is a modified PTFE containing 1 wt% or less of comonomer, such as hexafluoropropylene, perfluoro(alkyl vinyl ether), fluoroalkyl ethylene, or chlorotrifluoroethylene, It is a melt flowable PTFE known as "PTFE micropowder" or "PTFE wax". Such PTFE can be directly obtained by irradiating or heating non-melt flowable high molecular weight PTFE known as "molding powder" or "fine powder", or by polymerizing tetrafluoroethylene in the presence of a chain transfer agent. As far as the details of the manufacturing method are concerned, the radiation method is disclosed in Japanese Kokoku Patent No. Sho 47[1972]-19609 or No. Sho 52[1977]-38870. The direct polymerization method is disclosed in U.S. Patent No. 3,067,262, U.S. Patent No. 6,060,167, Japanese Kokoku Patent No. Sho 57[1982]-22043, and U.S. Patent No. 5,789,504.

The MFR of the PTFE in the present invention is selected such that the MFR of the composition formed by mixing with said PFA is 12 g/10 min or greater, preferably, 14 g/10 min or greater. If the MFR of the composition is lower than 12 g/10 min, it is difficult to injection mold satisfactorily. Thus, although as stated in the Background of the Invention, PFA used for injection molding has an MFR of 10 g/10 min or greater, in the composition of the invention, because of the presence of PTFE in the PFA, a minimum MFR of 12 g/10 min is necessary for satisfactory injection molding.

The MFR of the composition obtained by mixing PFA and PTFE can be estimated using the following equation:

$$(1/\text{MFR of the composition})^{1/3.4} = (\text{Weight percentage of PFA})\,(1/\text{MFR of PFA})^{1/3.4} + (\text{weight percentage of PTFE})\,(1/\text{MFR of PTFE})^{1/3.4}$$

Since the MFR of the composition may deviate from the value calculated from the aforementioned equation due to pyrolysis or coupling phenomenon of the polymer occurring during mixing or due to fluorination or other post-treatment

performed after mixing, the MFR of the PTFE can be determined by taking said deviations into consideration so that the MFR of the final composition is in the desired range. The MFR of PTFE is selected to be in the range of 0.05-1000 g/10 min. It is difficult to obtain a composition suitable for injection molding if the MFR lower than 0.05 g/10 min. The lower limit on MFR is preferably 0.3 g/10 min. Although there is no adverse effect on the durability or permeation resistance of the composition when the molecular weight of PTFE is reduced to increase the MFR, the amount of the volatile low molecular substance will be higher at an MFR of 1000 g/10min or greater, leading to foaming and/or bubbling. The upper limit on the MFR is preferably 500 g/10 min.

The permeation resistance of the composition increases as the proportion of PTFE in the composition increases. In the present invention, the proportion of PTFE is 15 wt% or greater. On the other hand, the durability of the composition declines, i.e. flex life falls below about 20,000 cycles, when the proportion of PTFE exceeds a certain limit. The maximum percentage of PTFE consistent with good durability of the composition increases as the flex life of the PFA component increases. However, if the percentage exceeds 60 wt%, loss of tensile strength and other mechanical properties can become serious. The upper limit on the percentage of the PTFE is preferably 60 wt%, more preferably, 50 wt%. It is understood that this upper limit may be excessive depending on the flex life of the PFA component. The higher the flex life of the PFA component, the greater the amount of PTFE that can be used in the composition. As a first approximation, the effect of PTFE on composition flex life can be estimated by assuming that the flex life of the PFA component will be halved for each 10 wt% of PTFE added. That is, if the PFA has a flex life of 1,000,000 cycles, a 90/10 PFA/PTFE composition will have a flex life of approximately 500,000 cycles and an 80/20 composition will have a flex life of approximately 250,000 cycles.

When manufacturing the composition of the present invention, if PTFE is not uniformly mixed in the composition, the durability will be reduced. Therefore, it is preferred to melt knead PFA and PTFE homogeneously in a conventional batch type or continuous type kneader or in a twin screw extruder with appropriate screw elements for good mixing. It is also possible to dry blend the PFA powder and the PTFE powder before the melt kneading. It is also possible to blend aqueous dispersions of the PFA and PTFE, coagulate them, separate the coagulate and dry it. Additionally it is possible to add the particles of PTFE (or PFA) into a polymerization medium in a polymerization vessel, followed by starting the polymerization to make PFA (or PTFE) to obtain a mixed powder with a core/shell structure.

In the present invention, it is preferred to perform fluorination before or after melt kneading PFA and PTFE according to the method described in U.S. Patent No. 4,743,658 in order stabilize the terminal groups of the polymer to reduce the eluted fluorine ions and improve the ozone resistance of articles fabricated from the composition.

The composition for injection molding of the present invention has excellent resistance to chemical permeation and good durability and can be used to mold parts with complicated shapes such as are used for pipes for transporting various types of chemical solutions, fittings for pipes, storage containers, pumps, and filters used in semiconductor or liquid crystal manufacturing processes.

## EXAMPLES

In the application examples and comparative examples below, a PFA copolymer of tetrafluoroethylene and PEVE obtained according to the method of U.S. Patent No. 5,760,151 was used in making the composition. Properties were measured using the following methods.

Perfluoro(alkyl vinyl ether) content of PFA The sample was cooled with water after being compression molded at 350°C. A film with thickness of about 50 μm was obtained. The content was derived according to the method of US Patent No. 5,760,151 from the IR absorption spectrum (in nitrogen atmosphere) of the film.

Melt flow rate (MFR) A melt indexer (manufactured by Toyo Seiki K.K.) equipped with anti-corrosive cylinder, die, piston was used according to ASTM D1238-95. 5 g of sample was put into the cylinder which had been heated at 372±1°C. The sample was held in the cylinder for 5 min, and then it was extruded through the die orifice under a load of 5 kg (piston plus weight). The extrusion rate (g/10 min) of the melted product is reported as MFR.

Flex life A test piece with length of about 110 mm and width of 15 mm was cut from a film with thickness of about 0.19-0.21 mm formed by means of compression molding at 350°C. The test piece was installed in an anti-bending fatigue test machine according to the specification of ASTM D-2176. The sample piece was flexed at a rate of 175 times/min through an angle of about 135° under a load of 1 kg. The number of bending cycles until the test piece was broken was measured for 5 test pieces. The average value was taken as the flex life.

Nitrogen gas permeability An S-69 gas/steam permeability measurement device produced by Shibata Chemical Machine K.K. was used to measure the nitrogen gas permeability at 23°C for a film with a thickness of 0.25-0.35 mm formed by means of compression molding at 350°C.

### Example 1

PFA having an MFR of 15 and containing 7.4 wt% of PEVE was melt kneaded with PTFE powder having an

MFR of 15 g/10 min (Zonyl® MP1600N, manufactured by DuPont) at a weight ratio of 80:20 using a Plastomill (RH60) produced by Toyo Seiki K.K. at 360°C and 30 rpm for 10 min. The characteristics of the PFA and of the resulting blend composition are summarized in Table 1.

## Comparative Example 1

The melt kneading operation was carried out as described in Example 1 except that the weight ratio of PFA and PTFE was changed to 60:40. The characteristics of the obtained composition are summarized in Table 1. 40 wt% PTFE is excessive in the blend of Comparative Example 1 because it depresses the flex life of the composition below 20,000 cycles.

**Table 1**

| | | Example 1 | Comparative Example 1 |
|---|---|---|---|
| PFA | MFR (g/10 min) | 15 | Same as Example 1 |
| | PEVE content (wt%) | 7.4 | Same as Example 1 |
| | Flex life (cycles) | 270,000 | Same as Example 1 |
| | Nitrogen gas permeability $cm^3(STP)\cdot cm/cm^2\cdot sec\cdot cm\ Hg$ | $0.94 \times 10^{-10}$ | Same as Example 1 |
| PTFE | MFR (g/10 min) | 15 | Same as Example 1 |
| Composition | Mixing ratio (PFA:PTFE) | 80:20 | 60:40 |
| | MFR (g/10 min) | 15 | 15 |
| | Flex life (cycles) | 70,000 | 6000 |
| | Nitrogen gas permeability $cm^3(STP)\cdot cm/cm^2\cdot sec\cdot cm\ Hg$ | $0.63 \times 10^{-10}$ | $0.52 \times 10^{-10}$ |

## Example 2

PFA with MFR of 20 and containing 8.7 wt% of PEVE and the PTFE used in Example 1 were melt kneaded at a weight ratio of 80:20 as described in Example 1. The characteristics of the PFA and the obtained composition are summarized in Table 2.

## Example 3 not according to the present invention

The PFA used in Example 2 and PTE powder with MFR of 1.4 g/10 min (product name TLP, product of Mitsui DuPont Fluorochemical Co., Ltd.) were melt kneaded at a weight ratio of 90:10 as described in Example 1. The characteristics of the obtained composition are summarized in Table 2.

## Example 4 not according to the present invention

The melt kneading operation was carried out as described in Example 3 except for using PFA with MFR 22 and containing 10.0 wt% of PEVE. The characteristics of the PFA and the obtained composition are summarized in Table 2.

**Table 2**

| | | Example 2 | Example 3 | Example 4 |
|---|---|---|---|---|
| PFA | MFR (g/10 min) | 20 | Same as Example 2 | 22 |
| | PEVE content (wt%) | 8.7 | Same as Example 2 | 10.0 |
| | Flex life (cycles) | 430,000 | Same as Example 2 | 790,000 |

(continued)

| | | Example 2 | Example 3 | Example 4 |
|---|---|---|---|---|
| | Nitrogen gas permeability $cm^3(STP)\cdot cm/cm^2\cdot sec\cdot cm\ Hg$ | $1.05 \times 10^{-10}$ | Same as Example 2 | $1.13 \times 10^{-10}$ |
| PTFE | MFR (g/10 min) | 15 | 1.4 | Same as Example 3 |
| Composition | Mixing ratio (PFA:PTFE) | 80:20 | 90:10 | Same as Example 3 |
| | MFR (g/10 min) | 19 | 13 | 15 |
| | Flex life (cycles) | 110,000 | 180,000 | 400,000 |
| | Nitrogen gas permeability $cm^3(STP)\cdot cm/cm^2\cdot sec\cdot cm\ Hg$ | $0.64 \times 10^{-10}$ | $0.57 \times 10^{-10}$ | $0.62 \times 10^{-10}$ |

**Example 5**

PFA with MFR of 5 g/10 min and containing 7.3 wt% of PEVE and PTFE powder with MFR of 180 g/10 min obtained according to the method described in US Patent No. 6,060,167 were melt kneaded at weight ratio of 60:40 as described in Example 1. The characteristics of the PFA and the obtained composition are summarized in Table 3.

**Comparative Example 2**

Melt kneading operation was carried out as described in Example 5 except for using a PTFE powder with MFR of 60 g/10 min obtained according to the method described in U.S. Patent No. 6,060,167 as PTFE. The characteristics of the obtained composition are summarized in Table 3. Example 5 shows that 40 wt% PTFE, which was excessive in Comparative Example 1, is acceptable in the Example 5 composition because the PFA component had a higher flex life (1,350,000 cycles) than did the PFA component of Comparative Example 1 (270,000 cycles). Comparative Example 2 has too low an MFR (11 g/10 min) to be a satisfactory injection molding polymer. The PTFE MFR of 60 g/10 min is not high enough to counteract the MFR (5 g/10 min) of the PFA component. As Example 1 shows, PTFE of MFR 180 g/10 min does give a composition of acceptable MFR, i.e. 14 g/10 min.

**Table 3**

| | | Example 5 | Comparative Example 2 |
|---|---|---|---|
| PFA | MFR (g/10 min) | 5 | Same as Example 5 |
| | PEVE content (wt%) | 7.3 | Same as Example 5 |
| | Flex life (cycles) | 1,350,000 | Same as Example 5 |
| | Nitrogen gas permeability $cm^3(STP)\cdot cm/cm^2\cdot sec\cdot cm\ Hg$ | $0.96 \times 10^{-10}$ | Same as Example 5 |
| PTFE | MFR (g/10 min) | 180 | 60 |
| Composition | Mixing ratio (PFA:PTFE) | 60:40 | 60:40 |
| | MFR (g/10 min) | 14 | 11 |
| | Flex life (cycles) | 40,000 | 50,000 |
| | Nitrogen gas permeability $cm^3(STP)\cdot cm/cm^2\cdot sec\cdot cm\ Hg$ | $0.42 \times 10^{-10}$ | $0.48 \times 10^{-10}$ |

**Example 6**

PFA used in Example 1 and PFA with MFR of 0.6 and containing 6.9 wt% of PEVE were melt kneaded at a weight ratio of 92.5:7.5 as described in Example 1, obtaining a blended PFA of MFR 10.1, flex life of 470,000 cycles, and nitrogen gas permeability of $0.95\times10^{-10}$ $cm^3(STP).cm/cm^2/sec.cm$ Hg. The blended PFA and the PTFE used in Example 5 (MFR 180 g/10 min) were mixed at a weight ratio of 80:20 as described in Example 1 to obtain a composition. The properties of this composition were MFR 15 g/10 min, flex life 140,000 cycles, nitrogen gas permeability $0.59\times10^{-10}$

$cm^3$(STP).cm/$cm^2$/sec.cm Hg.

**Example 7**

**Hydrochloric Acid Permeation Test**

Disc-shaped sheets with thickness of 1 mm and diameter of 77 mm were formed at 350°C by means of compression molding from commercially available products A, B of PFA (copolymer of tetrafluoroethylene and PPVE) shown in Table 4 and the composition of Example 1. Referring to Fig. 1, the sheet was compressed by being sandwiched via O-ring 3 made of fluorine rubber between PTFE cylinder 4 with an inner diameter of 64 mm and PTFE containers 1 a, 1 b. 60 mL of 35% hydrochloric acid was added into the central cylinder 4 (volume: 120 mL), and the cylindrical part was heated to 70°C by a heater. Air was fed into the PTFE containers 1a, 1b. The hydrochloric acid gas permeating through the sheet was collected by collection bottles 6a, 6b containing 300 mL of pure water. The concentration of the hydrochloric acid in the pure water was measured by means of ion chromatography every 3 days. The amount of hydrochloric acid permeation (ppm) was calculated using the following equation.

$$\textbf{Hydrochloric acid permeation (unit: } \mu\textbf{g.mm/cm}^2\textbf{) = Concentration of hydrochloric acid} \times 300 \times 1/(3.22 \times 3.14)$$

The total amount of hydrochloric acid permeation after performing this test continuously for 30 days is shown in Table 4.

Table 4

| | | PFA commercially available product A | PFA commercially available product B | |
|---|---|---|---|---|
| Sample | MFR (g/10 min) | 14 | 14 | Composition of Example 1 |
| | PPVE content (wt%) | 3.7 | 5.6 | |
| | Flex life (cycles) | 30,000 | 130,000 | |
| | Nitrogen gas permeability $cm^3$(STP)·cm/$cm^2$·sec·cm Hg | $0.83 \times 10^{-10}$ | $1.12 \times 10^{10}$ | |
| Total amount of hydrochloric acid permeation (30 day) ($\mu$g·mm/$cm^2$) | | $29 \times 10^3$ | $2.71 \times 10^3$ | $1.21 \times 10^3$ |

**Claims**

1. A composition for injection molding comprising polytetrafluoroethylene and copolymer of tetrafluoroethylene and perfluoro(alkyl vinyl ether), wherein the proportion of the polytetrafluoroethylene is 15 wt% or more, wherein the polytetrafluoroethylene is a homopolymer of tetrafluoroethylene or is a modified polytetrafluoroethylene containing 1 wt% or less of comonomer and wherein the perfluoro(alkyl vinyl ether) content in the copolymer is 3 wt% or more, said composition having a melt flow rate of 12 g/10 min or greater, a flex life of 20,000 cycles or greater, and a nitrogen gas permeability of $0.8 \times 10^{-10}$ $cm^3$ (STP).cm/$cm^2$.sec.cm Hg or less.

2. The composition of claim 1 wherein the flex life is 40,000 cycles or greater.

3. The composition of claim 1 wherein the flex life is 100,000 cycles or greater.

4. The composition of claim 1 wherein the nitrogen gas permeability is $0.7 \times 10^{-10}$ $cm^3$ (STP).cm/$cm^2$.sec.cm Hg or less.

5. The composition of claim 1 wherein the perfluoro(alkyl vinyl ether) content in the copolymer is 5 wt% or more.

6. The composition of claim 4 wherein the content of the perfluoro(alkyl vinyl ether) is 20 wt% or less.

7. The composition of claim 4 wherein the content of the perfluoro(alkyl vinyl ether) is 15 wt% or less.

8. The composition of claim 4 wherein the content of the perfluoro(alkyl vinyl ether) is 10 wt% or less.

9. The composition of claim 1 wherein the melt flow rate of the copolymer is 2 g/10 min or greater.

10. The composition of claim 1 wherein the melt flow rate of the copolymer is 4 g/10 min or greater.

11. The composition of claim 9 wherein the melt flow rate of the copolymer is 70 g/10 min or less.

12. The composition of claim 9 wherein the melt flow rate of the copolymer is 40 g/10 min or less.

13. The composition of claim 1 wherein the melt flow rate of the polytetrafluoroethylene is 0.05 g/10 min or greater.

14. The composition of claim 1 wherein the melt flow rate of the polytetrafluoroethylene is 0.3 g/10 min or greater.

15. The composition of claim 1 wherein the proportion of the polytetrafluoroethylene is 60 wt% or less.

## Patentansprüche

1. Zusammensetzung für Spritzguss, die Polytetrafluorethylen und ein Copolymer von Tetrafluorethylen und Perfluor(alkylvinylether) aufweist, wobei der Anteil des Polytetrafluorethylens 15 Gew.-% oder mehr beträgt, das Polytetrafluorethylen ein Homopolymer von Tetrafluorethylen oder ein modifiziertes Polytetrafluorethylen ist, das 1 Gew.-% oder weniger Comonomer enthält, und wobei der Perfluor(alkylvinylether)-Gehalt in dem Copolymer 3 Gew.-% oder mehr beträgt, wobei die Zusammensetzung einen MFI-Index von 12 g/10 min oder mehr, eine Dauerbiegefestigkeit von 20000 Zyklen oder mehr und eine Stickstoffgasdurchlässigkeit von $0{,}8 \times 10^{-10}$ $cm^3$ (Normaldruck)·cm/$cm^2$·s·cm Hg oder weniger aufweist.

2. Zusammensetzung nach Anspruch 1, wobei die Dauerbiegefestigkeit 40000 Zyklen oder mehr beträgt.

3. Zusammensetzung nach Anspruch 1, wobei die Dauerbiegefestigkeit 100000 Zyklen oder mehr beträgt.

4. Zusammensetzung nach Anspruch 1, wobei die Stickstoffgasdurchlässigkeit $0{,}7 \times 10^{-10}$ $cm^3$ (Normaldruck)·cm/$cm^2$·s·cm Hg oder weniger beträgt.

5. Zusammensetzung nach Anspruch 1, wobei der Perfluor(alkylvinylether)-Gehalt in dem Copolymer 5 Gew.-% oder mehr beträgt.

6. Zusammensetzung nach Anspruch 4, wobei der Perfluor(alkylvinylether)-Gehalt 20 Gew.-% oder weniger beträgt.

7. Zusammensetzung nach Anspruch 4, wobei der Perfluor(alkylvinylether)-Gehalt 15 Gew.-% oder weniger beträgt.

8. Zusammensetzung nach Anspruch 4, wobei der Perfluor(alkylvinylether)-Gehalt 10 Gew.-% oder weniger beträgt.

9. Zusammensetzung nach Anspruch 1, wobei der MFI-Index des Copolymers 2 g/10 min oder mehr beträgt.

10. Zusammensetzung nach Anspruch 1, wobei der MFI-Index des Copolymers 4 g/10 min oder mehr beträgt.

11. Zusammensetzung nach Anspruch 9, wobei der MFI-Index des Copolymers 70 g/10 min oder weniger beträgt.

12. Zusammensetzung nach Anspruch 9, wobei der MFI-Index des Copolymers 40 g/10 min oder weniger beträgt.

13. Zusammensetzung nach Anspruch 1, wobei der MFI-Index des Polytetrafluorethylens 0,05 g/10 min oder mehr beträgt.

14. Zusammensetzung nach Anspruch 1, wobei der MFI-Index des Polytetrafluorethylens 0,3 g/10 min oder mehr beträgt.

**15.** Zusammensetzung nach Anspruch 1, wobei der Anteil des Polytetrafluorethylens 60 Gew.-% oder weniger beträgt.

**Revendications**

**1.** Composition de moulage par injection comprenant du polytétrafluoroéthylène et un copolymère de tétrafluoroéthylène et de perfluoro(éther d'alkyl vinyle), dans laquelle la proportion de polytétrafluoroéthylène est de 15% en pds ou supérieure, dans laquelle le polytétrafluoroéthylène est un homopolymère de tétrafluoroéthylène ou est un polytétrafluoroéthylène modifié contenant 1 % en pds ou moins de comonomère et dans laquelle la teneur en perfluoro(éther d'alkyl vinyle) dans le copolymère est de 3 % en pds ou supérieure, ladite composition ayant une vitesse d'écoulement à l'état fondu de 12 g/10 min ou supérieure, une durée de vie en flexion de 20000 cycles ou supérieure, et une perméabilité à l'azote gazeux de 0,8 x $10^{-10}$ $cm^3$ (STP)·cm/$cm^2$·sec·cm Hg ou moins.

**2.** Composition selon la revendication 1, dans laquelle la durée de vie en flexion est de 40000 cycles ou supérieure.

**3.** Composition selon la revendication 1, dans laquelle la durée de vie en flexion est de 100000 cycles ou supérieure.

**4.** Composition selon la revendication 1, dans laquelle la perméabilité à l'azote gazeux est de 0,7 x $10^{-10}$ $cm^3$ (STP)·cm/$cm^2$·sec·cm Hg ou moins.

**5.** Composition selon la revendication 1, dans laquelle la teneur en perfluoro(éther d'alkyl vinyle) dans le copolymère est de 5 % en pds ou supérieure.

**6.** Composition selon la revendication 4, dans laquelle la teneur en perfluoro(éther d'alkyl vinyle) est de 20 % en pds ou inférieure.

**7.** Composition selon la revendication 4, dans laquelle la teneur en perfluoro(éther d'alkyl vinyle) est de 15 % en pds ou inférieure.

**8.** Composition selon la revendication 4, dans laquelle la teneur en perfluoro(éther d'alkyl vinyle) est de 10 % en pds ou inférieure.

**9.** Composition selon la revendication 1, dans laquelle la vitesse d'écoulement à l'état fondu du copolymère est de 2 g/10 min ou supérieure.

**10.** Composition selon la revendication 1, dans laquelle la vitesse d'écoulement à l'état fondu du copolymère est de 4 g/10 min ou supérieure.

**11.** Composition selon la revendication 9, dans laquelle la vitesse d'écoulement à l'état fondu du copolymère est de 70 g/10 min ou inférieure.

**12.** Composition selon la revendication 9, dans laquelle la vitesse d'écoulement à l'état fondu du copolymère est de 40 g/10 min ou inférieure.

**13.** Composition selon la revendication 1, dans laquelle la vitesse d'écoulement à l'état fondu du polytétrafluoroéthylène est de 0,05 g/10 min ou supérieure.

**14.** Composition selon la revendication 1, dans laquelle la vitesse d'écoulement à l'état fondu du polytétrafluoroéthylène est de 0,3 g/10 min ou supérieure.

**15.** Composition selon la revendication 1, dans laquelle la proportion du polytétrafluoroéthylène est de 60 % en pds ou inférieure.

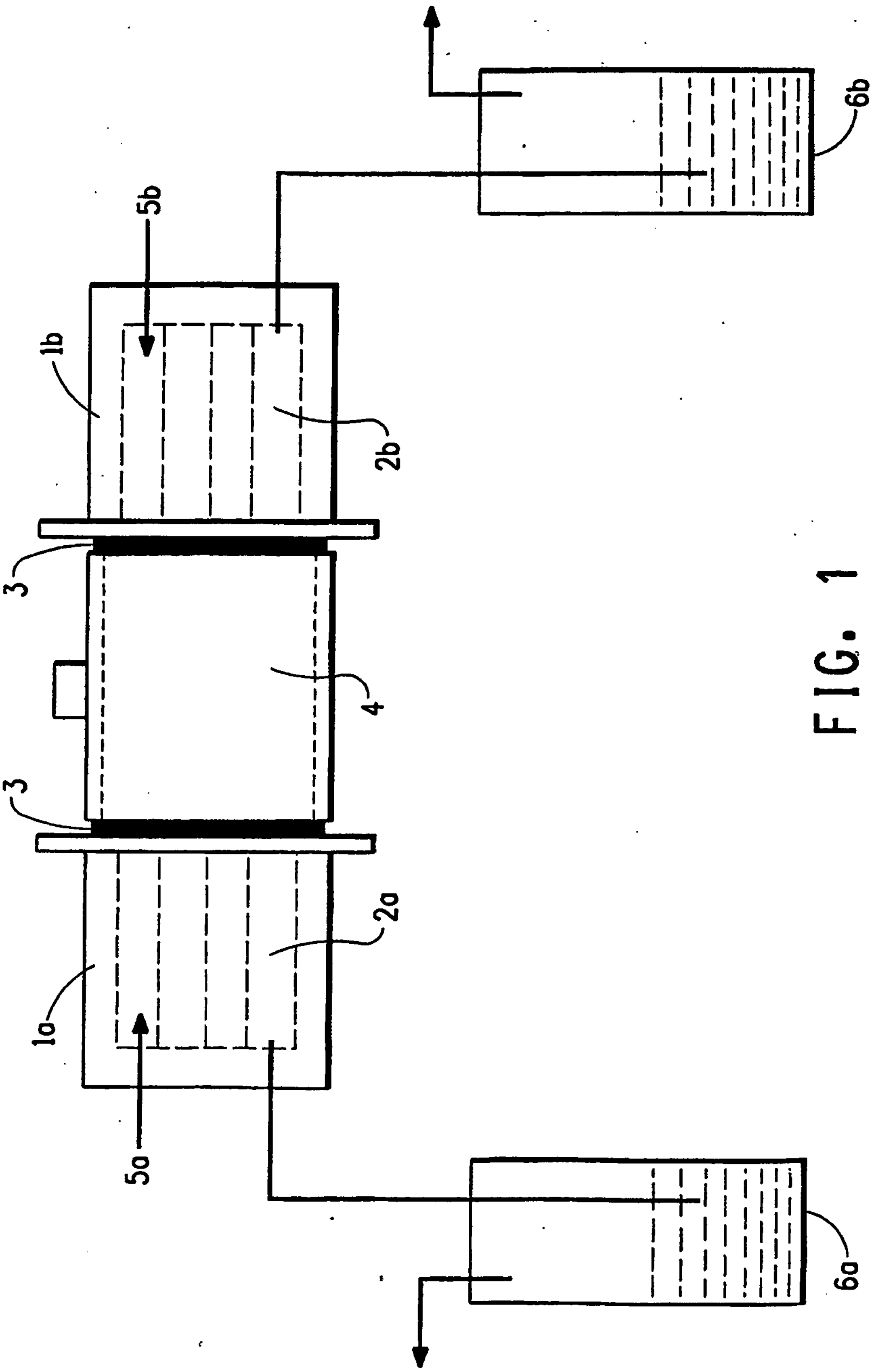


FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6649699 B
- JP 2003327770 A
- JP SHO47197219609 B
- JP SHO52197738870 B
- US 3067262 A
- US 6060167 A
- JP SHO57198222043 B
- US 5789504 A
- US 4743658 A
- US 5760151 A